**Europäisches Patentamt**

**European Patent Office**

**Office européen des brevets**

(19)

(11) Veröffentlichungsnummer: **0 350 802**
**A1**

# (12) EUROPÄISCHE PATENTANMELDUNG

(21) Anmeldenummer: 89112425.7

(22) Anmeldetag: 07.07.89

(51) Int. Cl.⁴: **F16L 58/10 , F16L 55/165 , F16L 55/18 , E03F 3/06**

(30) Priorität: 09.07.88 CH 2614/88

(43) Veröffentlichungstag der Anmeldung:
**17.01.90 Patentblatt 90/03**

(84) Benannte Vertragsstaaten:
**AT BE DE ES FR GB GR IT LU NL SE**

(71) Anmelder: **AMETEX AG**
**Eternitstrasse 3**
**CH-8867 Niederurnen(CH)**

(72) Erfinder: **Shaw, Keith James**
**Rainstrasse 50**
**CH-8808 Pfäffikon SZ(CH)**
Erfinder: **Caluori, André**
**Badstubenstrasse 11**
**CH-8880 Walenstadt(CH)**

(74) Vertreter: **Scheidegger, Werner & Co.**
**Stampfenbachstrasse 48 Postfach**
**CH-8023 Zürich(CH)**

(54) **Verfahren zur Sanierung von Rohrleitungen.**

(57) Das Verfahren zur Sanierung von Rohrleitungen mit angeschlossenen Abzweigleitungen besteht im wesentlichen darin, dass zwischen die zu sanierende Rohrleitung (1) und das einzutreibende Renovationsrohr (4) eine Schlauchfolie (3) eingelegt wird, welche sich gegen die Innenwand der Leitung (1) anlegen kann, dass zwischen Schlauch (3) und Rohr (4) Mörtel (5) eingefüllt wird und dass nach Erhärten des Mörtels (5) die Durchtrittsöffnungen (6) zu den Abzweigleitungen (2) herausgearbeitet werden (durch Leitung (1), Mörtelschicht (2) und Schlauch (3) hindurch). Damit wird auf einfache Weise ein dichter Uebergang zu den Abzweigleitungen erzielt und gleichzeitig das Einführen des Renovationsrohres (4) erleichtert sowie gesamthaft eine optimale Ausführung erreicht.

Fig. 1

## Verfahren zur Sanierung von Rohrleitungen

Die vorliegende Erfindung betrifft ein Verfahren zur Sanierung von Rohrleitungen mit angeschlossenen Abzweigleitungen, bei welchen nach Erstellen eines Vermessungsplanes in die zu sanierende Rohrleitung ein Renovationsrohr aus Kunststoff eingetrieben, an den Anschlussstellen der Abzweigleitungen das Renovationsrohr mit einer entsprechenden Durchtrittsöffnung versehen und der seitliche Spalt im Durchgang zur Abzweigleitung abgedichtet und der Zwischenraum zwischen dem Renovationsrohr und der zu sanierenden Rohrleitung mit Mörtel ausgefüllt wird.

In letzter Zeit hat sich diese neue Technik der Rohrsanierung immer weiter entwickelt. Die in die zu sanierenden Rohrleitungen einzutreibenden Renovationsrohre werden dabei üblicherweise als Wickelrohre (z.B. am Ort aus Kunststoffbändern gewickelte Rohre) ausgebildet.

Eines der Hauptprobleme liegt darin, nach dem Eintreiben des Renovationsrohres die Verbindung zu den Abzweigleitungen herzustellen. Dies erfolgt in der Regel dadurch, dass aufgrund eines vorgängig erstellten Vermessungsplanes an den entsprechenden Stellen mittels eines in das Renovationsrohr einfahrenden Roboters die Wand des Renovationsrohres durchbohrt bzw. durchbrochen wird.

Da zur Stabilisierung der renovierten Rohrleitung und zum zusätzlichen Verschliessen von Schadstellen im ursprünglichen Rohr der Raum zwischen der Aussenwand des Renovationsrohres und der Innenwand der sanierten Rohrleitung mit Mörtel ausgefüllt wird, muss auch der seitliche Spalt zwischen diesen beiden Rohren in jedem Durchgang zu einer Abzweigleitung zuerst abgedichtet werden. Bei Ausbleiben dieser Massnahme würde der einzufül lende Mörtel an diesen Stellen austreten und Hauptwie auch Abzweigleitungen in unzulässiger Weise verstopfen.

Bisher wurde das Problem dadurch zu lösen versucht, dass an den genannten Stellen Dichtungselemente in Form von Manschetten angebracht wurden. Es hat sich aber gezeigt, dass das sichere Anbringen dieser Dichtungselemente (mittels des Roboters) ausserordentlich schwierig war. Zudem stellte das Ausbohren der Durchgänge zu den Abzweigleitungen, je nach Lage letzterer, hohe Anforderungen an die Genauigkeit, was wiederum je nach Lage des Renovationsrohres in der zu sanierenden Rohrleitung oft unlösbare Probleme stellte.

Aufgabe der vorliegenden Erfindung ist nun die Schaffung eines Verfahrens, welches die obengenannten Probleme auf einfache Weise und mit hoher Sicherheit zu lösen vermag.

Dieses Verfahren der eingangs definierten Art zeichnet sich nun erfindungsgemäss dadurch aus, dass spätestens gleichzeitig mit dem Eintreiben des Renovationsrohres in die zu sanierende Rohrleitung ein Schlauch aus flexiblem Material, welcher bis zur Anlage an die Wandung der zu sanierenden Rohrleitung aufweitbar ist, in die Rohrleitung eingebracht wird, dass das Renovationsrohr im Schlauchinnern eingetrieben wird, dass danach der Zwischenraum zwischen der Aussenwand des Renovationsrohres und der Innenwand des Schlauches vollständig mit Mörtel ausgefüllt und dass schliesslich, nach im wesentlichen erfolgter Aushärtung des Mörtels, an den entsprechenden Stellen die Durchtrittsöffnungen zu den vorübergehend verschlossenen Abzweigleitungen durch die Wand des Renovationsrohres, die Mörtelschicht und die Schlauchwand hindurch herausgearbeitet werden.

Vorzugsweise wird der aufweitbare flexible Schlauch schon vor dem Eintreiben des Renovationsrohres in das zu sanierende Rohr eingebracht und dabei beispielsweise bereits bis zur Anlage an die Innenwand des letzteren aufgeweitet (z.B. durch Aufblasen mittels Druckluft). In diesem Fall wird der Schlauch in der aufgeweiteten Position an der Innenwand des zu sanierenden Rohres festgehalten bzw. festgemacht, z.B. mitels eines mindestens an vorbestimmten Stellen der Schlauchaussenseite angebrachten Klebemittels.

An sich ist es auch denkbar, den flexiblen Schlauch zusammen mit dem Renovationsrohr in das zu sanierende Rohr einzubringen und dann erst mit dem anschliessend einzufüllenden Mörtel aufzuweiten.

Bei einer besonderen Ausführungsart wird der Schlauch beim Austritt des Renovationsrohres aus der Wickelmaschine als lose Hülle um das Rohr gelegt (evtl. in Form eines am Ort zu einem Schlauch gewickelten und verschweissten Bandes) und zusammen mit letzterem in die zu sanierende Rohrleitung eingebracht.

Dank des erfindungsgemässen Vorgehens, bei welchem die Abzweigleitungen durch den flexiblen Schlauch vorübergehend verschlossen werden und damit das Einfüllen des Mörtels ohne besondere Massnahmen erlauben, werden die Durchgänge zu den Abzweigleitungen erst am Schluss ausgeführt. Ein Abdichten des seitlichen Spaltes, welcher mit Mörtel ausgefüllt ist, ist dann nicht mehr erforderlich. Es ist auch nicht mehr von ausschlaggebender Wichtig keit, die Durchgänge mit höchster Präzision auszuführen (falls der Uebergang nicht perfekt ist und geringe räumliche Abweichungen verbleiben, hat dies keinen negativen Einfluss auf den Abfluss der Abwässer aus den Zuleitungen).

Die Erfindung wird nachstehend anhand von Ausführungsbeispielen, welche teilweise in der Zeichnung illustriert sind, noch etwas näher erläutert. Es zeigt:

Fig. 1 rein schematisch die verschiedenen, sich folgenden Schritte bei der Sanierung einer Rohrleitung mit Abzweigleitungen;

Fig. 2 eine Variante, bei welcher die Schritte b) und c) von Fig. 1 gleichzeitig ablaufen, und

Fig. 3 vergrösserte Ausschnitte der Stellen A und B von Fig. 1.

Die Zeichnung zeigt, wie eine zu sanierende Rohrleitung 1 mit seitlich einmündenden Abzweigleitungen 2 (besser seitlich einmündende Zufuhrleitungen 2, z.B. aus Hausanschlüssen).

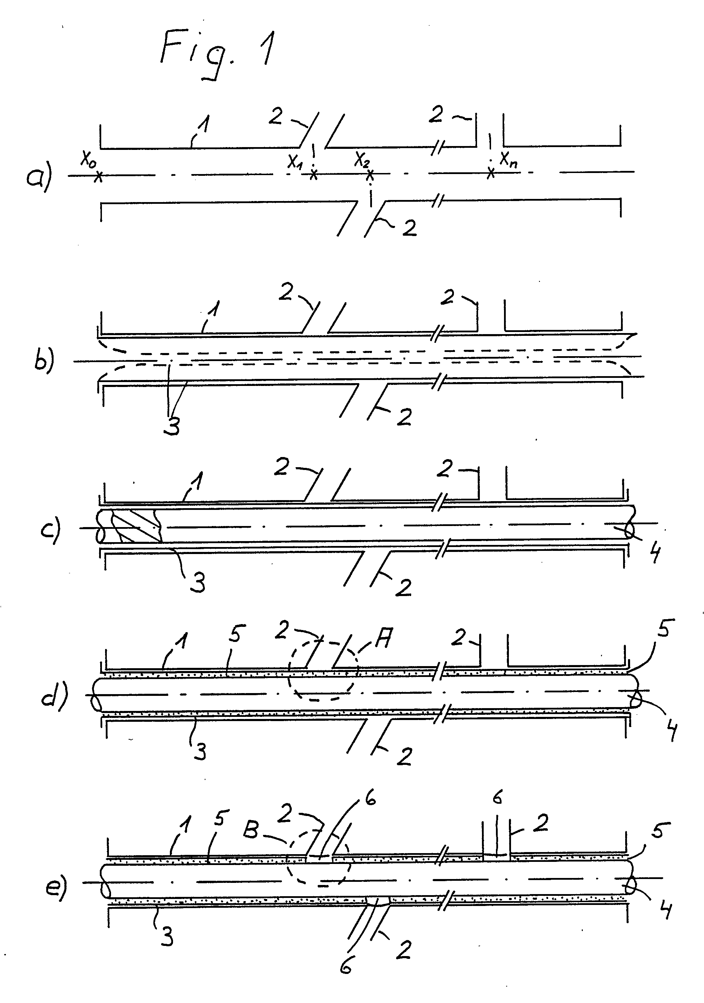

Fig. 1a illustriert eine vorzugsweise vorgereinigte Rohrleitung 1, von welcher mittels eines Roboters (nicht dargestellt) der mit Beleuchtung, Fernsehkameras etc. ausgerüstet und an ein computerisiertes Messsystem angeschlossen ist, ein genauer Vermessungsplan erstellt wird. Ausgehend vom Messpunkt $x_0$ wird z.B. die genaue Lage der Abzweigleitungen 2 ($x_1$ ,$x_2$.....$x_n$) ermittelt und für spätere Zwecke festgehalten. Der Roboter wird dabei vorzugsweise mit seiner Achse in der Achse der zu sanierenden Rohrleitung 1 geführt. Dieser Vorgang dient u.a. auch dazu, zu entscheiden, ob eine Rohrleitung einer Sanierung überhaupt bedarf oder damit noch zugewartet werden kann. Diese Technik wurde bereits bei den bisherigen Verfahren der Patentinhaberin angewendet.

Aus Fig. 1b geht hervor, wie vor dem Eintreiben eines Renovationsrohres eine als Schlauch 3 ausgebildete Folie in die zu sanierende Rohrleitung 1 eingebracht wird.

Dieser Schlauch 3 aus flexiblem Material (z.B. Polyäthylen, Polypropylen, Polyester, PVC) ist mindestens auf den Durchmesser der Rohrleitung 1 aufweitbar (frei aufweitbar oder teilweise elastisch verformbar). Das Aufweiten des Schlauches 3 kann durch das später einzutreibende Renovationsrohr mechanisch erfolgen, oder er kann (indem er an den Enden passend verschlossen wird) mittels Druckluft oder gar mittels einer Flüssigkeit aufgeweitet und zur Anlage an die Innenwand der Rohrleitung gebracht werden. Insbesondere bei vorgängiger Aufweitung ist der Schlauch 3 in aufgeweitetem Zustand zu halten. Dies kann z.B. dadurch erfolgen, dass auf der Schlauchaussenwand zumindest an vorbestimmten Stellen ein Klebstoff aufgebracht wird, durch welchen der Schlauch 3 nach dessen Aufweiten an der Innenwand der Rohrleitung 1 haften bleibt.

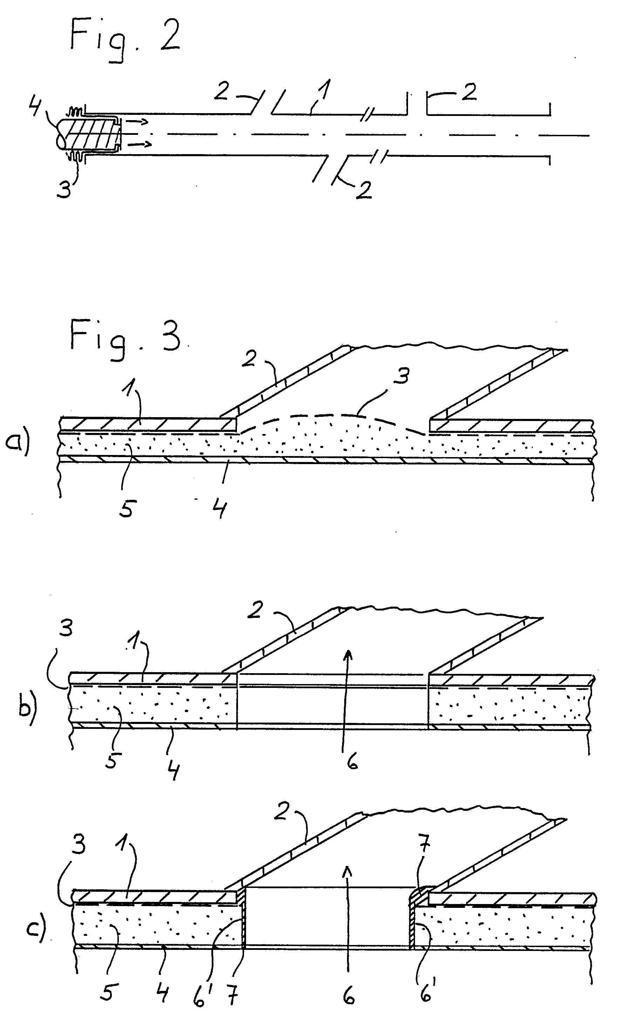

Fig. 2 der Zeichnung zeigt wie der Schlauch 3 gleichzeitig mit dem Eintreiben des z.B. am Ort gewickelten Renovationsrohres 4 eingebracht wird (die erforderliche Schlauchlänge wird am Eingang der Rohrleitung 1 auf das Renovationsrohr 4 aufgeschoben, am Kopf des letzteren festgemacht und nach und nach eingezogen; der Schlauch 3 hat einen grösseren Innendurchmesser als der Aussendurchmesser des Renovationsrohres 4, so dass die erforderliche Schlauchlänge problemlos aufgesetzt werden kann).

Fig. 1c zeigt, wie das Renovationsrohr 4 über die ganze Länge der Leitung 1 eingetrieben wird.

Nachdem sowohl der Schlauch 3 als auch das Renovationsrohr 4 in die zu sanierende Rohrleitung 1 eingesetzt sind, wird der Zwischenraum zwischen Schlauch 3 und Renovationsrohr 4 mit Mörtel 5 ausgefüllt und zum Aushärten gebracht (evtl. mit Zusatz eines Erhärtungs-Beschleunigers). Dieser Schritt ist in Fig. 1d dargestellt.

Fig. 3a zeigt einen vergrösserten Ausschnitt A aus Fig. 1d. Daraus geht hervor, dass die Schlauchfolie 3 an die Innenwand der Rohrleitung 1 angelegt wird, und der Mörtel 5 den Raum zwischen Rohr 4 und Leitung 3 vollständig ausfüllt (das Renovationsrohr kann mit äusseren Verankerungsrippen, hier nicht dargestellt, versehen sein). Am Durchgang zwischen Leitung 1 und Abzweigrohr 2 wird sich die Schlauchfolie 3 unter dem Druck des eingefüllten Mörtels leicht nach aussen verwölben. Es versteht sich von selbst, dass das Material der Schlauchfolie 3 von ausreichender Festigkeit und Dicke sein muss, damit an den Uebergängen zu den Abzweigrohren 2 keine Zerreissgefahr besteht.

Fig. 1e sowie dessen Ausschnitt B in Fig. 3b und 3c zeigen, wie nach Erhärtung des Mörtels 5 an den Einmündungen der Abzweigrohre 2 mittels eines geeigneten Werkzeuges (Bohrer oder Fräser auf dem im Innern des Renovationsrohres 4 verfahrbaren Roboter) Durchtrittsöffnungen 6 herausgearbeitet werden. Dabei wird die Wand des Renovationsrohres 4, die erhärtete Mörtelschicht 5 und die Schlauchfolie 3 durchbrochen.

Fig. 3b zeigt eine praktisch perfekt angebrachte Durchtrittsöffnung 6, d.h. eine Oeffnung, welche sehr genau (geometrisch) in das Abzweigrohr 2 führt. Aus dieser Figur geht auch hervor, dass der Uebergang vom Renovationsrohr 4 zum Abzweigrohr 2 vollständig abgedichtet ist. Selbstverständlich bildet der Schlauch 3, welchem primär eine Hilfsrolle zugedacht ist, eine zusätzliche Abdichtung gegen Wasser, Verunreinigungen etc., welche durch Bruchstellen in der Rohrleitung 1 eindringen können.

Die Schlauchfolie 3 aus Kunststoff bildet zudem einen ausgezeichneten Gleitbelag, welcher das Eintreiben des Renovationsrohres 4 wesentlich erleichtert.

Das erfindungsgemässe Verfahren führt somit zu einer optimalen Ausführung der Renovation und die Schlauchfolie 3 vereinfacht zusätzlich das Einführen des Renovationsrohres.

Fig. 3c zeigt noch eine Durchtrittsöffnung 6, welche weniger perfekt ausgeführt ist als jene nach Fig 3b. Es ist aber klar, dass auch diese Ausführung die gestellten Anforderungen zu erfüllen vermag.

Bei Bedarf könnten die Seitenflächen 6' des Ueberganges noch mit einer zusätzlichen Abdeckschicht 7, z.B. aus aufgesprühtem, schnell aushärtendem Kunstharz versehen werden, um eine noch perfektere Ausführung zu bringen. Dies wird sich aber in der Regel erübrigen.

## Ansprüche

1. Verfahren zur Sanierung von Rohrleitungen mit angeschlossenen Abzweigleitungen, bei welchem nach Erstellen eines Vermessungsplanes in die zu sanierende Rohrleitung ein Renovationsrohr aus Kunststoff eingetrieben, an den Anschlussstellen der Abzweigleitungen das Renovationsrohr mit einer entsprechenden Durchtrittsöffnung versehen und der seitliche Spalt im Durchgang zur Abzweigleitung abgedichtet, und der Zwischenraum zwischen dem Renovationsrohr und der zu sanierenden Rohrleitung mit Mörtel ausgefüllt wird, dadurch gekennzeichnet, dass spätestens gleichzeitig mit dem Eintreiben des Renovationsrohres in die zu sanierende Rohrleitung ein Schlauch aus flexiblem Material, welcher bis zur Anlage an die Wandung der zu sanierenden Rohrleitung aufweitbar ist, in die Rohrleitung eingebracht wird, dass das Renovationsrohr im Schlauchinnern eingetrieben wird, dass danach der Zwischenraum zwischen der Aussenwand des Renovationsrohres und der Innenwand des Schlauches vollständig mit Mörtel ausgefüllt und dass schliesslich, nach im wesentlichen erfolgter Aushärtung des Mörtels, an den entsprechenden Stellen die Durchtrittsöffnungen zu den vorübergehend verschlossenen Abzweigleitungen durch die Wand des Renovationsrohres, die Mörtelschicht und die Schlauchwand hindurch herausgearbeitet werden.

2. Verfahren nach Anspruch 1, dadurch gekennzeichnet, dass der aufweitbare flexible Schlauch vor dem Eintreiben des Renovationsrohres in das zu sanierende Rohr eingebracht wird.

3. Verfahren nach Anspruch 2, dadurch gekennzeichnet, dass der in das zu sanierende Rohr eingebrachte Schlauch bis zur Anlage an dessen Innenwand aufgeweitet und in dieser Lage festgehalten wird.

4. Verfahren nach Anspruch 3, dadurch gekennzeichnet, dass zum Festhalten des aufgeweiteten Schlauches an der Innenwand des zu sanierenden Rohres die Aussenfläche des Schlauches wenigstens an vorbestimmten Stellen mit einem Klebemittel versehen wird.

5. Verfahren nach einem der Ansprüche 1-4, dadurch gekennzeichnet, dass die Aufweitung des Schlauches mittels Druckluft oder einer Flüssigkeit erfolgt.

6. Verfahren nach anspruch 1, dadurch gekennzeichnet, dass der flexible Schlauch zusammen mit dem Renovationsrohr in das zu sanierende Rohr eingebracht wird.

7. Verfahren nach Anspruch 6, dadurch gekennzeichnet, dass der Schlauch beim Austritt des Renovationsrohres aus der Wickelmaschine als lose Hülle um das Renovationsrohr gelegt und mit letzterem zusammen in die zu sanierende Rohrleitung eingebracht wird.

# Fig. 1

Fig. 2

Fig. 3

**Europäisches Patentamt**

# EUROPÄISCHER RECHERCHENBERICHT

| EINSCHLÄGIGE DOKUMENTE | | | EP 89112425.7 |
|---|---|---|---|
| Kategorie | Kennzeichnung des Dokuments mit Angabe, soweit erforderlich, der maßgeblichen Teile | Betrifft Anspruch | KLASSIFIKATION DER ANMELDUNG (Int. Cl.X) 5 |
| A | US - A - 4 054 473 (OHNSTAD) * Gesamt * -- | 1-4 | F 16 L 58/10 F 16 L 55/165 F 16 L 55/18 E 03 F 3/06 |
| A | EP - A1 - 0 161 078 (PARKYN) * Gesamt * -- | 1 | |
| A | GB - A - 2 192 441 (STEPMEN TRACEY) * Gesamt * -- | 1 | |
| A | GB - A - 2 041 147 (FUSION EQUIPMENT LTD.) * Gesamt * -- | 1 | |
| A | DE - A1 - 2 934 813 (STRABAG BAU-AG) * Gesamt * -- | 1 | |
| A | US - A - 4 434 115 (CHICK) * Gesamt * -- | 1 | RECHERCHIERTE SACHGEBIETE (Int. Cl.X) 5 |
| A | DE - A1 - 3 618 963 (VOSS ADOLF) * Gesamt * -- | 1 | F 16 L 13/00 F 16 L 41/00 F 16 L 55/00 F 16 L 58/00 E 03 F 3/00 |
| A | EP - A2 - 0 158 042 (WILK & HÖGLUND GMBH) * Gesamt * ---- | 1 | |

Der vorliegende Recherchenbericht wurde für alle Patentansprüche erstellt.

| Recherchenort WIEN | Abschlußdatum der Recherche 21-09-1989 | Prüfer SCHUGANICH |
|---|---|---|

KATEGORIE DER GENANNTEN DOKUMENTEN
X : von besonderer Bedeutung allein betrachtet
Y : von besonderer Bedeutung in Verbindung mit einer anderen Veröffentlichung derselben Kategorie
A : technologischer Hintergrund
O : nichtschriftliche Offenbarung
P : Zwischenliteratur
T : der Erfindung zugrunde liegende Theorien oder Grundsätze

E : älteres Patentdokument, das jedoch erst am oder nach dem Anmeldedatum veröffentlicht worden ist
D : in der Anmeldung angeführtes Dokument
L : aus andern Gründen angeführtes Dokument

& : Mitglied der gleichen Patentfamilie, übereinstimmendes Dokument

EPA Form 1503 03 82